# EUROPEAN PATENT SPECIFICATION

(11) **EP 3 225 903 B1**
(45) Date of publication and mention of the grant of the patent: **03.04.2019**
(21) Application number: 15862568.1
(22) Date of filing: 04.11.2015
(51) Int. Cl.: F21S 2/00, F21V 33/00, F21V 23/00, G03B 21/20, G03B 15/05

(54) **INTELLIGENT PROJECTION LIGHT BULB AND INTERACTIVE AND INTELLIGENT PROJECTION METHOD THEREOF**
INTELLIGENTE PROJEKTIONSGLÜHBIRNE UND INTERAKTIVES UND INTELLIGENTES PROJEKTIONSVERFAHREN DAMIT
AMPOULE ÉLECTRIQUE À PROJECTION INTELLIGENTE ET SON PROCÉDÉ DE PROJECTION INTERACTIVE ET INTELLIGENTE

(30) Priority: 28.11.2014 CN 201410709561
(43) Date of publication of application: 04.10.2017
(73) Proprietor: iView Displays (Hong Kong) Company Limited, Wanchai, Hong Kong (CN)
(72) Inventor: GAO, Zhiqiang, Hong Kong (CN); YEUNG, Steve, Hong Kong (CN); LIN, Qingyun, Hong Kong (CN)
(74) Representative: Stuttard, Garry Philip
(86) International application number: PCT/CN2015/093773
(87) International publication number: WO 2016/082670

(56) References cited:
- WO-A1-2013/041023
- CN-A- 102 162 582
- CN-A- 102 325 411
- CN-A- 103 987 164
- CN-A- 103 987 167
- CN-A- 104 075 141
- CN-A- 104 501 001
- US-A1- 2013 002 687
- US-A1- 2013 169 814
- US-A1- 2014 198 949

## Description

The invention relates to an intelligent projection bulb and projection method using the same.

Benefiting from wide field of vision, projectors have been increasingly popular among users. However, traditional projectors are bulky and have no computer's processing function, in use, the projectors need to be connected to a computer, that is to say, the user must have both a projector and a computer to realize the projection function, which is very inconvenient. With the development of science and technology, various intelligent projectors and multimedia applications having computer functions emerge one after another, and the users pose more requirements for large screen and human-computer interaction. Intelligent projection means that an intelligent projection system can automatically adjust the projection information instantly according to user's real-time operation information to achieve human-computer interaction. The intelligent projector formed by combining a projector and a computer simultaneously has general projection function and specific projection function, thus enriching the user experience, popularizing the projector, so that the projection can be achieved anytime and anywhere. Unfortunately, existing intelligent projectors are bulky, inconvenient for carrying, and have high costs.

As a conventional lighting tool, bulb is widely used and easy to operate. However, typical bulbs only have a single lighting function, which cannot meet the requirement for intelligent lighting. The intelligent lighting means an intelligent projection system can automatically adjust the lighting zone, brightness, and color according to user's operation information and environmental change, thus bringing comfortable user experience. US2014198949A1 relates to an audio, projection, and mapping system for use in small spaces such as bed rooms or family rooms in private houses, hotel rooms, receptions areas, waiting spaces/rooms, and the like. US2013002687A1 relates to a lighting device provided with means that make it possible to create light effects and to deliver multimedia content such as images, movies and audio. US2013169814A1 relates to a lamp socket type camera having a bulb socket capable of being threadedly and electrically connected to an existing lamp socket for receiving electric power from the lamp socket, and an image capturing element capable of capturing image data from outside of the camera and transmitting the image data out via a wireless transmission module wirelessly.

In view of the above-described problems of conventional intelligent projectors such as being bulky, inconvenience for carrying and single function of lighting, it is one objective of the invention to provide an intelligent projection bulb that simultaneously features the functions of intelligent projection and intelligent lighting.

To achieve the above objective, in accordance with one embodiment of the invention, there is provided an intelligent projection bulb, comprising:
a bulb holder, configured to connect the intelligent projection bulb and a bulb base;
a power input device electrically connected to the bulb holder; and
an intelligent projection system electrically connected to the power input device, the intelligent projection system comprising: a central processing unit, a projection module, a wireless transmission module, a visible light/infrared light module, and a video camera.

The wireless transmission module is in wireless connection to an external electronic equipment, and the wireless transmission module and the external electronic equipment are mutually independent; the wireless transmission module is electrically connected to the central processing unit; the wireless transmission module is configured to achieve transmission of data signal information between the intelligent projection system and the external electronic equipment in wireless connection to the intelligent projection system via a wireless network in the manner of wireless communication, so that the data signal information from the external electronic equipment is transmitted to the central processing unit. The projection module is electrically connected to the central processing unit so as to project projection information instructed from the central processing unit on a projection space; the video camera is electrically connected to the central processing unit and acquires and transmits images in the projection space or lighting space to the central processing unit for comparison; and the visible light/infrared light module is electrically connected to the central processing unit to emit visible light/infrared light beams capable of covering the projection space or lighting space. The video camera comprises an infrared transmission selecting component; the infrared transmission selecting component comprises a visible light through hole, an infrared transmission filter, and a sliding device; areas of the visible light through hole and the infrared transmission filter are larger than or equal to an area of emergent light of photographing beams of the video camera; the sliding device is disposed below the infrared transmission filter and electrically connected to the central processing unit; the central processing unit controls the sliding device to slide automatically; when the visible light/infrared light module works under the infrared light, the central processing unit controls the sliding device to enable the infrared transmission filter to cover a light emergent hole of the video camera.

In a class of this embodiment, the bulb holder comprises a built-in AC-DC converter which is connected to a DC power input device and converts AC power into DC power to supply power for the intelligent projection bulb; the central processing unit comprises a USB interface, which is configured to be connected to an external power supply to supply power for the intelligent projection bulb, and is also adapted to read data of an external memory card.

In a class of this embodiment, the projection module comprises a projection lens capable of emitting projection beams and lighting beams.

In a class of this embodiment, the projection module is Liquid Crystal on Silicon (LCOS) pico projector or Digital Light Procession (DLP) pico projector.

In a class of this embodiment, the central processing unit, the projection module, the wireless transmission module, the visible light/infrared light module, and the video camera are integrated on a circuit board.

In a class of this embodiment, the intelligent projection system comprises a speaker and a bluetooth wireless transmission module.

In a class of this embodiment, the intelligent projection system is an android intelligent projector, Linux system intelligent projector, or IOS system intelligent projector.

In a class of this embodiment, the wireless transmission module is a Wan wireless communication module and/or WiFi wireless transmission module supporting WiFi direct connection protocol.

In a class of this embodiment, the central processing unit comprises a detection unit, which is configured to switch the intelligent projection bulb between a wireless projection mode and an external projection mode.

In a second embodiment of the invention, a method of intelligent projection using an intelligent projection bulb is provided, the method comprising:
S201: employing a projection module to project initial projection information instructed from a central processing unit on a projection space;
S202: allowing the central processing unit to control a visible light/infrared light module to emit infrared light beams, controlling a sliding device of an infrared transmission selecting component to allow an infrared transmission filter to cover a light emergent hole of the video camera;
S203: employing a video camera to acquire and transmit images on a projection plane to the central processing unit;
S204: allowing the central processing unit to process acquired images to acquire information of the projection plane, the information of the projection plane comprising background color of projection and concave-convex positions of the projection plane; and
S205: controlling the projection module to correct projection beams by the central processing unit according to the information of the projection plane to perform intelligent projection.

In a third embodiment of the invention, an intelligent projection system is provided, comprising: a central processing unit, a projection module, a wireless transmission module, a visible light/infrared light module, and a video camera.

The wireless transmission module is in wireless connection to an external electronic equipment, and the wireless transmission module and the external electronic equipment are mutually independent; the wireless transmission module is electrically connected to the central processing unit; the wireless transmission module is configured to achieve transmission of data signal information between the intelligent projection system and the external electronic equipment in wireless connection to the intelligent projection system via a wireless network in the manner of wireless communication, so that the data signal information from the external electronic equipment is transmitted to the central processing unit; the projection module is electrically connected to the central processing unit so as to project projection information instructed from the central processing unit on a projection space; the video camera is electrically connected to the central processing unit and acquires and transmits images in the projection space or lighting space to the central processing unit for comparison; and the visible light/infrared light module is electrically connected to the central processing unit to emit visible light/infrared light beams capable of covering the projection space or lighting space. The video camera comprises an infrared transmission selecting component; the infrared transmission selecting component comprises a visible light through hole, an infrared transmission filter, and a sliding device; areas of the visible light through hole and the infrared transmission filter are larger than or equal to an area of emergent light of photographing beams of the video camera; the sliding device is disposed below the infrared transmission filter and electrically connected to the central processing unit; the central processing unit controls the sliding device to slide automatically; when the visible light/infrared light module works under the infrared light, the central processing unit controls the sliding device to enable the infrared transmission filter to cover a light emergent hole of the video camera.

The intelligent projection bulb of the present disclosure features the functions of intelligent projection and intelligent lighting, has low price, light weight and is convenient for carrying. Because the bulb itself has a lighting device, when it is equipped with an intelligent projection system, without the involvement of conventional space-occupying tools such as TV sets and monitors, a user can watch movie and television programs and perform human-computer interactive games through connecting the intelligent projection bulb to an electronic equipment such as mobiles, computers, or panel PCs in a wireless mode, thus achieving the immersion perception of virtual reality and reducing the costs. In addition, with the help of the intelligent projection system, besides normal lighting, the bulb has the function of intelligent lighting. The present disclosure also provides a method of interaction of the intelligent projection bulb, based on which, the interactive projection of the intelligent projection bulb and the user can be achieved, thus enhancing the user's interactive experience.
FIG. 1 is a schematic diagram illustrating modules of an intelligent projection bulb according to one embodiment of the invention;
FIG. 2 is a flow chart of a method of interaction of an intelligent projection bulb according to one embodiment of the invention;
FIG. 3 is another schematic diagram illustrating modules of an intelligent projection bulb according to one embodiment of the invention;
FIG. 4 is an enlarged view of an infrared transmission selecting component of an intelligent projection bulb according to one embodiment of the invention; and
FIG. 5 is a flow chart of a method of intelligent projection using an intelligent projection bulb according to one embodiment of the invention.

The invention is described herein below with reference to the accompanying drawings. It should be noted that the examples are intended to describe and not to limit the invention.

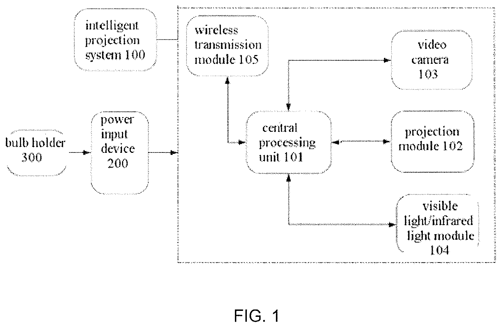

FIG. 1 is a schematic diagram illustrating modules of an intelligent projection bulb. As shown in FIG. 1, the intelligent projection bulb comprises a bulb holder 300, a power input device 200, and an intelligent projection system 100. The intelligent projection system 100 comprises: a central processing unit 101, a projection module 102, a video camera 103, a visible light/infrared light module 104, and a wireless transmission module 105.

Specifically, the bulb holder 300 is a common bulb holder, which is configured to connect the intelligent projection bulb and a bulb base. To match the bulb base, the bulb holder can be made into a rotary type or a clamping type. The bulb holder 300 comprises a built-in AC-DC converter which is connected to the power input device 200 and converts AC power into DC power to supply power for the intelligent projection bulb. The power input device 200 can be directly connected to a DC power supply such as power bank to supply power for the intelligent projection bulb.

The central processing unit 101 comprises a USB interface, which is configured to be connected to an external power supply to supply power for the intelligent projection bulb, and is also adapted to read data of an external memory card, so that the intelligent projection bulb works in an external projection mode. The central processing unit 101 comprises a detection unit, which is configured to switch the intelligent projection bulb between a wireless projection mode and an external projection mode.

The projection module 102 is a common pico projector, LCOS pico projector or DLP pico projector. The projection module 102 is electrically connected to the central processing unit 101 so as to project projection information instructed from the central processing unit 101 on a projection space. The projection information instructed from the central processing unit 101 comprises: information of an external memory card inserted in the USB interface, or projection information transmitted to the central processing unit 101 from an external electronic equipment such as smart phones, tablet computers, PDAs, and desktop computers in wireless connection to the central processing unit 101 via a wireless network. The projection module 102 comprises a projection lens capable of emitting projection beams and lighting beams. When the lighting beams are emitted, the intelligent projection bulb performs the function of lighting.

The video camera 103 is electrically connected to the central processing unit 101 and acquires and transmits images in the projection space or lighting space to the central processing unit 101 for processing. To enable the photographing beams of the video camera 103 to cover the projection space or lighting space, the photographing direction of the video camera 103 is adjustable.

The visible light/infrared light module 104 is electrically connected to the central processing unit 101 to emit visible light/infrared light beams capable of covering the projection space or lighting space. To enable the visible light/infrared light beams of the visible light/infrared light module 104 to cover the projection space or lighting space, the direction of the visible light/infrared light module 104 is adjustable.

The wireless transmission module 105 is in wireless connection to an external electronic equipment, and the wireless transmission module and the external electronic equipment are mutually independent; the wireless transmission module is electrically connected to the central processing unit 101; the wireless transmission module is configured to achieve transmission of data signal information between the intelligent projection system 100 and the external electronic equipment including smart phones, tablet computers, PDAs, and desktop computers in wireless connection to the intelligent projection system via a wireless network in the manner of wireless communication. When the user directly sends control data signals to the intelligent projection system via the electronic equipment, the wireless transmission module 105 transmits the control data signals from the electronic equipment to the central processing unit 101, thus completing the control of the intelligent projection system, and achieving the purpose of real-time interaction.

The projection module 102, the video camera 103, the visible light/infrared light module 104, and the wireless transmission module 105 are all electrically connected to the central processing unit 101, and the working modes thereof can be controlled by the central processing unit, so as to control the intelligent projection bulb to work in an intelligent projection mode or an intelligent lighting mode or a combination thereof.

When the intelligent projection bulb works in an intelligent lighting mode, the lighting beams are emitted from the projection lens of the projection module 102. The central processing unit 101 controls the relevant modules to work according to the requirements for lighting, thus achieving the lighting effect of no shadow, automatic brightness adjustment, and changeable light color, etc.

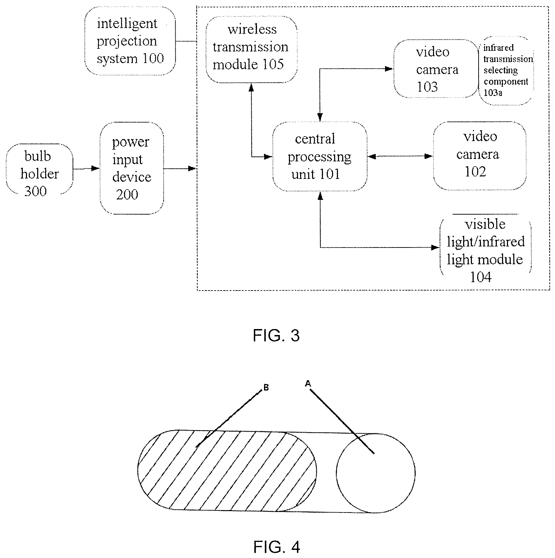

It is well-known to one or ordinary in the art that, the intelligent projection system 100 is included in the intelligent projection bulb, but the invention is not limited to this. As long as the intelligent projection system, the power input device 200 and the bulb holder 300 are connected according to the electric connection mode in FIG. 1, and can interact mutually, the embodiment of the invention can be achieved. In addition, the intelligent projection system 100 in FIG. 1 comprises: the central processing unit 101, the projection module 102, the video camera 103, the visible light/infrared light module 104, and the wireless transmission module 105. It is well-known to one or ordinary in the art that, based on specific requirements, the intelligent projection system 100 may comprise more or less modules. Furthermore, each module can be provided with a specific module to fulfill specific functions, for example, as shown in FIG. 3, the video camera 103 comprises an infrared transmission selecting component 103a. The following descriptions are given with reference to accompanying FIG. 3 and FIG. 4.

It is well-known to one or ordinary in the art that, the intelligent projection system 100 may be an independent module, or be combined with the power input device 200 and the bulb holder 300 to form the intelligent projection bulb.

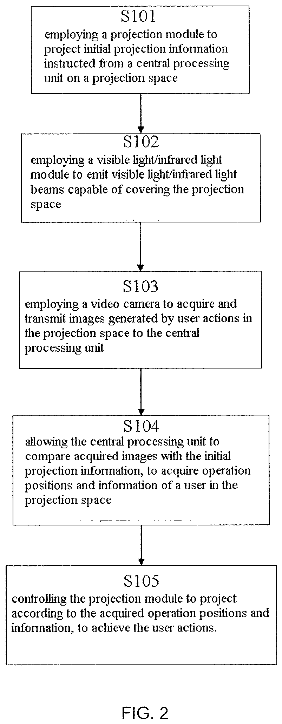

When the intelligent projection bulb works in an intelligent projection mode, for example, during the interaction of the intelligent projection bulb, the central processing unit 101, the projection module 102, the video camera 103, the visible light/infrared light module 104 are all in the working states. When the intelligent projection bulb interacts in an external projection mode, the wireless transmission module 105 is in the nonworking state, while the intelligent projection bulb interacts in a projection mode, the wireless transmission module 105 is in the working state. As show in FIG. 2, the method of interaction comprises:
S101: employing a projection module 102 to project initial projection information instructed from a central processing unit 101 on a projection space;
S102: employing a visible light/infrared light module 104 to emit visible light/infrared light beams capable of covering the projection space;
S103: employing a video camera 103 to acquire and transmit images generated by user actions in the projection space to the central processing unit 101;
S104: allowing the central processing unit 101 to compare acquired images with the initial projection information, to acquire operation positions and information of a user in the projection space; and
S105: controlling the projection module 102 to project according to the operation positions and information acquired by the central processing unit 101, to achieve the user actions.

The user actions are direct real-time operations of the user in the projection space when an external projector is in use, or real-time operations of the user in an external electronic equipment in wireless connection to the intelligent projection bulb; when the user actions are real-time operations of the user in the external electronic equipment in wireless connection to the intelligent projection bulb, S103 further comprises employing a wireless transmission module 105 to transmit acquired data signal information to the central processing unit 101.

Specifically, in S104, the central processing unit 101 compares the images acquired by the video camera 103 with the initial projection information, to acquire operation positions and information of beams of the visible light/infrared light module of sheltered by a user. According to the operation positions and information, the central processing unit 101 controls the projection module 102 to project, thus achieving the user actions.

For example, when the projection module 102 projects the initial projection information of a game of chess on the projection space, the visible light/infrared light beams emitted by the visible light/infrared light module104 cover the projection space. When the player touches a chess piece in the projection space or on an electronic terminal in wireless connection to the central processing unit 101, the video camera 103 acquires the action images of the player and compares the action images with the initial projection information to acquire operation positions and information of the play in the projection space, and the data information is transmitted to the central processing unit 101. According to the predetermined relationship, the central processing unit 101 acquires the position shifting of the touched chess piece on the projection plane, and then instantly instructs the projection module 102 to project an updated image after the chess piece moves, thus completing the user actions, achieving the purpose of human-computer interaction, and enhancing the user experience and the immersion perception of virtual reality.

As shown in FIGS. 3 and 4, in another embodiment of the invention, the video camera 103 comprises an infrared transmission selecting component 103a; the infrared transmission selecting component comprises a visible light through hole A, an infrared transmission filter B, and a sliding device (not shown in the drawings); areas of the visible light through hole A and the infrared transmission filter B are larger than or equal to an area of emergent light of photographing beams of the video camera 102. The sliding device is disposed below the infrared transmission filter B and electrically connected to the central processing unit; the central processing unit 101 controls the sliding device to slide automatically; when the visible light/infrared light module 104 works under the infrared light, the central processing unit 101 controls the sliding device to enable the infrared transmission filter B to cover a light emergent hole of the video camera 103, and thus the visible light is filtered and the infrared transmitting light beams enter the video camera 103.

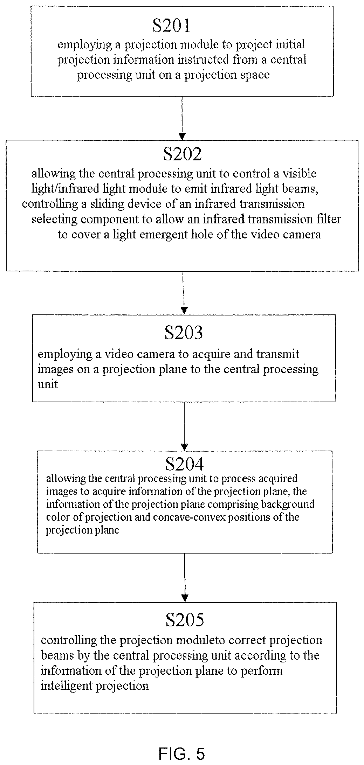

The infrared transmission selecting component 103a of the video camera 103 can further make the intelligent projection bulb intelligent, specifically, can detect the background color of the projection space and concave-convex positions of the projection plane, and the central processing unit 101 can correct the projection beams, thus achieving the intelligent projection and ensuring the projection pictures to meet the adaptive conditions, and enhancing the comfort of users. As shown in FIG. 5, when the projection pictures on the projection plane are not clear enough, steps of intelligent projection comprise:
S201: employing a projection module 102 to project initial projection information instructed from a central processing unit 101 on a projection space;
S202: allowing the central processing unit 101 to control a visible light/infrared light module 104 to emit infrared light beams, controlling a sliding device of an infrared transmission selecting component 103a to allow an infrared transmission filter B to cover a light emergent hole of the video camera 103;
S203: employing the video camera 103 to acquire and transmit images on a projection plane to the central processing unit;
S204: allowing the central processing unit 101 to process acquired images to acquire information of the projection plane, the information of the projection plane comprising background color of projection and concave-convex positions of the projection plane; and
S205: controlling the projection module 102 to correct projection beams by the central processing unit 101 according to the information of the projection plane to perform intelligent projection.

Specifically, in S203, the infrared beams from the visible light/infrared light module 104 are projected on the projection plane, and then are reflected from the projection plane onto the infrared transmission filter B along with environmental visible light beams and projection light beams, the environmental visible light beams and projection light beams are filtered, and the infrared band enters the video camera, thus ensuring the imaging quality of the pictures acquired by the video camera.

The user actions are direct real-time operations of the user in the projection space when an external projector is in use, or real-time operations of the user in an external electronic equipment in wireless connection to the intelligent projection bulb; when the user actions are real-time operations of the user in the external electronic equipment in wireless connection to the intelligent projection bulb, S203 further comprises employing a wireless transmission module 105 to transmit acquired data signal information to the central processing unit 101.

For example, when the projection module 102 projects the initial projection information of a game of chess having concave-convex positions on the projection space, the central processing unit 101 controls the visible light/infrared light module 104 to emit infrared light beams, and then controls the sliding device of the infrared transmission selecting component 103a to allow the infrared transmission filter B to cover the light emergent hole of the video camera 103. The infrared beams from the visible light/infrared light module 104 are projected on the projection plane, and then are reflected from the projection plane onto the infrared transmission filter B along with environmental visible light beams and projection light beams, the environmental visible light beams and projection light beams are filtered, and the infrared band enters the video camera 103. When the player touches a chess piece in the projection space or on an electronic terminal in wireless connection to the central processing unit 101, the video camera 103 acquires the action images of the player and compares the action images with the initial projection information to acquire operation positions and information of the play in the projection space, the information comprising background color of projection and concave-convex positions of the projection plane, and the data information is transmitted to the central processing unit 101. According to the predetermined relationship, the central processing unit 101 acquires the position shifting of the touched chess piece on the projection plane, and then instantly instructs the projection module 102 to correct projection beams and project an updated image after the chess piece moves, thus completing the user actions, achieving the purpose of human-computer interaction, enhancing the user experience and the immersion perception of virtual reality, and ensuring the projection pictures to meet the adaptive conditions.

The intelligent projection bulb of the present disclosure features the functions of intelligent projection and intelligent lighting, has low price, light weight and is convenient for carrying. Because the bulb itself has a lighting device, when it is equipped with an intelligent projection system, without the involvement of conventional space-occupying tools such as TV sets and monitors, a user can watch movie and television programs and perform human-computer interactive games through connecting the intelligent projection bulb to an electronic equipment such as mobiles, computers, or panel PCs in a wireless mode, thus achieving the immersion perception of virtual reality and reducing the costs. In addition, with the help of the intelligent projection system, besides normal lighting, the bulb has the function of intelligent lighting.

Based on the method of interaction of the intelligent projection bulb, the interactive projection of the intelligent projection bulb and the user can be achieved, thus enhancing the user's interactive experience.

## Claims

1. An intelligent projection bulb, comprising:
a bulb holder (300), configured to connect the intelligent projection bulb and a bulb base;
a power input device (200) electrically connected to the bulb holder; and
an intelligent projection system (100) electrically connected to the power input device, the intelligent projection system comprising: a central processing unit (101), a projection module (102), a wireless transmission module (105), a visible light/infrared light module (104), and a video camera (103);
wherein the wireless transmission module is in wireless connection to an external electronic equipment, and the wireless transmission module and the external electronic equipment are mutually independent; the wireless transmission module is electrically connected to the central processing unit; the wireless transmission module is configured to achieve transmission of data signal information between the intelligent projection system and the external electronic equipment in wireless connection to the intelligent projection system via a wireless network in the manner of wireless communication, so that the data signal information from the external electronic equipment is transmitted to the central processing unit;
the projection module is electrically connected to the central processing unit so as to project projection information instructed from the central processing unit on a projection space; the video camera is electrically connected to the central processing unit and acquires and transmits images in the projection space or lighting space to the central processing unit for comparison; and the visible light/infrared light module is electrically connected to the central processing unit to emit visible light/infrared light beams capable of covering the projection space or lighting space;
**characterized in that** the video camera comprises an infrared transmission selecting component; the infrared transmission selecting component comprises a visible light through hole, an infrared transmission filter, and a sliding device; areas of the visible light through hole and the infrared transmission filter are larger than or equal to an area of emergent light of photographing beams of the video camera;
the sliding device is disposed below the infrared transmission filter and electrically connected to the central processing unit; the central processing unit controls the sliding device to slide automatically; when the visible light/infrared light module works under the infrared light, the central processing unit controls the sliding device to enable the infrared transmission filter to cover a light emergent hole of the video camera.

2. The intelligent projection bulb of claim 1, wherein the bulb holder comprises a built-in AC-DC converter which is connected to a DC power input device and converts AC power into DC power to supply power for the intelligent projection bulb; the central processing unit comprises a USB interface, which is configured to be connected to an external power supply to supply power for the intelligent projection bulb, and is also adapted to read data of an external memory card.

3. The intelligent projection bulb of claim 1, wherein the projection module comprises a projection lens capable of emitting projection beams and lighting beams.

4. The intelligent projection bulb of claim 1, wherein the projection module is LCOS pico projector or DLP pico projector.

5. The intelligent projection bulb of claim 1, wherein the central processing unit, the projection module, the wireless transmission module, the visible light/infrared light module, and the video camera are integrated on a circuit board.

6. The intelligent projection bulb of claim 1, wherein the intelligent projection system comprises a speaker and a bluetooth wireless transmission module.

7. The intelligent projection bulb of claim 1, wherein the intelligent projection system is an android intelligent projector, Linux system intelligent projector, or IOS system intelligent projector.

8. The intelligent projection bulb of claim 1, wherein the wireless transmission module is a Wan wireless communication module and/or WiFi wireless transmission module supporting WiFi direct connection protocol.

9. The intelligent projection bulb of claim 8, wherein the central processing unit comprises a detection unit, which is configured to switch the intelligent projection bulb to work between in a wireless projection mode and in an external projection mode.

10. A method of intelligent projection using an intelligent projection bulb, the method comprising:
employing (S201) a projection module to project initial projection information instructed from a central processing unit on a projection space;
allowing (S202) the central processing unit to control a visible light/infrared light module to emit infrared light beams, controlling a sliding device of an infrared transmission selecting component to allow an infrared transmission filter to cover a light emergent hole of a video camera;
employing (S203) the video camera to acquire and transmit images on a projection plane to the central processing unit;
allowing (S204) the central processing unit to process acquired images to acquire information of the projection plane, the information of the projection plane comprising background color of projection and concave-convex positions of the projection plane; and
controlling (S205) the projection module to correct projection beams by the central processing unit according to the information of the projection plane to perform intelligent projection.

11. An intelligent projection system, comprising: a central processing unit, a projection module, a wireless transmission module, a visible light/infrared light module, and a video camera;
wherein the wireless transmission module is in wireless connection to an external electronic equipment, and the wireless transmission module and the external electronic equipment are mutually independent; the wireless transmission module is electrically connected to the central processing unit; the wireless transmission module is configured to achieve transmission of data signal information between the intelligent projection system and the external electronic equipment in wireless connection to the intelligent projection system via a wireless network in the manner of wireless communication, so that the data signal information from the external electronic equipment is transmitted to the central processing unit; the projection module is electrically connected to the central processing unit so as to project projection information instructed from the central processing unit on a projection space; the video camera is electrically connected to the central processing unit and acquires and transmits images in the projection space or lighting space to the central processing unit for comparison; and the visible light/infrared light module is electrically connected to the central processing unit to emit visible light/infrared light beams capable of covering the projection space or lighting space,
**characterized in that** the video camera comprises an infrared transmission selecting component; the infrared transmission selecting component comprises a visible light through hole, an infrared transmission filter, and a sliding device; areas of the visible light through hole and the infrared transmission filter are larger than or equal to an area of emergent light of photographing beams of the video camera;
the sliding device is disposed below the infrared transmission filter and electrically connected to the central processing unit; the central processing unit controls the sliding device to slide automatically; when the visible light/infrared light module works under the infrared light, the central processing unit controls the sliding device to enable the infrared transmission filter to cover a light emergent hole of the video camera.

## Patentansprüche

1. Intelligente Projektionslampe, umfassend:
eine Lampenfassung (300), welche derart konfiguriert ist, dass sie die intelligente Projektionslampe und einen Lampensockel verbindet;
eine Leistungseingangsvorrichtung (200), welche elektrisch mit der Lampenfassung verbunden ist; und
ein intelligentes Projektionssystem (100), welches elektrisch mit der Leistungseingangsvorrichtung verbunden ist, wobei das intelligente Projektionssystem umfasst: eine Zentraleinheit (101), ein Projektionsmodul (102), ein drahtloses Übertragungsmodul (105), ein sichtbares Licht-/Infrarotlicht-Modul (104) und eine Videokamera (103);
wobei das drahtlose Übertragungsmodul in drahtloser Verbindung mit einer externen elektronischen Vorrichtung steht, und das drahtlose Übertragungsmodul und die externe elektronische Vorrichtung voneinander unabhängig sind; das drahtlose Übertragungsmodul elektrisch mit der Zentraleinheit verbunden ist; das drahtlose Übertragungsmodul derart konfiguriert ist, dass es eine Übertragung von Datensignalinformationen zwischen dem intelligenten Projektionssystem und der externen elektronischen Vorrichtung bewirkt, welche über ein drahtloses Netzwerk in der Art einer drahtlosen Kommunikation in drahtloser Verbindung mit dem intelligenten Projektionssystem steht, so dass die Datensignalinformationen von der externen elektronischen Vorrichtung zu der Zentraleinheit übertragen werden;
das Projektionsmodul elektrisch mit der Zentraleinheit verbunden ist, um Projektionsinformationen, welche von der Zentraleinheit angewiesen werden, auf einen Projektionsraum zu projizieren; die Videokamera elektrisch mit der Zentraleinheit verbunden ist und Bilder im Projektionsraum oder Beleuchtungsraum erfasst und zum Vergleich an die Zentraleinheit überträgt; und das sichtbares Licht-/Infrarotlicht-Modul elektrisch mit der Zentraleinheit verbunden ist, um sichtbare Licht- / Infrarotlichtstrahlen zu emittieren, welche den Projektionsraum oder den Beleuchtungsraum abdecken können;
**dadurch gekennzeichnet, dass** die Videokamera eine Infrarot-Transmissionsauswahlkomponente umfasst; die Infrarot-Transmissionsauswahlkomponente ein Durchgangsloch für sichtbares Licht, einen Infrarot-Transmissionsfilter und eine Gleitvorrichtung umfasst; Bereiche des Durchgangslochs für sichtbares Licht und des Infrarot-Transmissionsfilters größer als oder gleich einem Bereich von austretendem Licht von Fotografierstrahlen der Videokamera sind;
die Gleitvorrichtung unterhalb des Infrarot-Transmissionsfilters angeordnet und elektrisch mit der Zentraleinheit verbunden ist; die Zentraleinheit die Gleitvorrichtung derart steuert, dass sie automatisch gleitet; wenn das sichtbare Licht-/Infrarot-Lichtmodul mit InfrarotLicht arbeitet, die Zentraleinheit die Gleitvorrichtung derart steuert, dass der Infrarot-Transmissionsfilter ein Lichtaustrittsloch der Videokamera abdecken kann.

2. Intelligente Projektionslampe nach Anspruch 1, wobei der Lampenhalter einen eingebauten AC-DC-Wandler umfasst, welcher mit einer DC-Leistungseingangsvorrichtung verbunden ist und AC-Leistung in DC-Leistung umwandelt, um der intelligenten Projektionslampe Leistung zuzuführen; die Zentraleinheit eine USB-Schnittstelle umfasst, welche derart konfiguriert ist, dass sie mit einer externen Stromversorgung verbunden werden kann, um die intelligente Projektionslampe mit Strom zu versorgen, und auch zum Lesen von Daten einer externen Speicherkarte geeignet ist.

3. Intelligente Projektionslampe nach Anspruch 1, wobei das Projektionsmodul eine Projektionslinse umfasst, welche Projektionsstrahlen und Beleuchtungsstrahlen emittieren kann.

4. Intelligente Projektionslampe nach Anspruch 1, wobei das Projektionsmodul LCOS-Pico-Projektor oder DLP-Pico-Projektor ist.

5. Intelligente Projektionslampe nach Anspruch 1, wobei die Zentraleinheit, das Projektionsmodul, das drahtlose Übertragungsmodul, das sichtbares Licht-/Infrarotlicht-Modul, und die Videokamera auf einer Leiterplatte integriert sind.

6. Intelligente Projektionslampe nach Anspruch 1, wobei das intelligente Projektionssystem einen Lautsprecher und ein drahtloses Bluetooth-Übertragungsmodul umfasst.

7. Intelligente Projektionslampe nach Anspruch 1, wobei das intelligente Projektionssystem ein intelligenter Projektor basierend auf Android, ein intelligenter Projektor basierend auf einem Linux-System, oder ein intelligenter Projektor basierend auf dem IOS-System ist.

8. Intelligente Projektionslampe nach Anspruch 1, wobei das drahtlose Übertragungsmodul ein drahtloses Wan-Kommunikationsmodul und/oder ein drahtloses WiFi-Übertragungsmodul ist, welches das WiFi-Direktverbindungsprotokoll unterstützt.

9. Intelligente Projektionslampe nach Anspruch 8, wobei die Zentraleinheit eine Erfassungseinheit umfasst, welche konfiguriert ist, um die intelligente Projektionslampe derart zu schalten, dass sie in einem drahtlosen Projektionsmodus oder einem externen Projektionsmodus arbeitet.

10. Verfahren zur intelligenten Projektion unter Verwendung einer intelligenten Projektionslampe, wobei das Verfahren umfasst:
Verwenden (S201) eines Projektionsmoduls zum Projizieren von initialen Projektionsinformationen, welche von einer Zentraleinheit angewiesen werden, auf einen Projektionsraum;
Ermöglichen (S202) der Zentraleinheit, ein sichtbares Licht-/Infrarotlicht-Modul derart zu steuern, dass es InfrarotLichtstrahlen emittiert, Steuern einer Gleitvorrichtung einer Infrarot-Transmissionsauswahlkomponente, damit ein Infrarot-Transmissionsfilter ein Lichtaustrittsloch einer Videokamera abdecken kann;
Verwenden (S203) der Videokamera zum Erfassen und Übertragen von Bildern auf einer Projektionsebene an die Zentraleinheit;
Ermöglichen (S204) der Zentraleinheit, aufgenommene Bilder zu verarbeiten, um Informationen der Projektionsebene zu erhalten, wobei die Informationen der Projektionsebene Hintergrundfarbe der Projektion und konkav-konvexe Positionen der Projektionsebene umfassen; und
Steuern (S205) des Projektionsmoduls zum Korrigieren von Projektionsstrahlen durch die Zentraleinheit gemäß den Informationen der Projektionsebene, um eine intelligente Projektion durchzuführen.

11. Intelligentes Projektionssystem, umfassend: eine Zentraleinheit, ein Projektionsmodul, ein drahtloses Übertragungsmodul, ein sichtbares Licht-/Infrarotlicht-Modul, und eine Videokamera;
wobei das drahtlose Übertragungsmodul in drahtloser Verbindung mit einer externen elektronischen Vorrichtung ist, und das drahtlose Übertragungsmodul und die externe elektronische Vorrichtung voneinander unabhängig sind; das drahtlose Übertragungsmodul elektrisch mit der Zentraleinheit verbunden ist; das drahtlose Übertragungsmodul derart konfiguriert ist, dass es eine Übertragung von Datensignalinformationen zwischen dem intelligenten Projektionssystem und der externen elektronischen Vorrichtung bewirkt, welche über ein drahtloses Netzwerk in der Art einer drahtlosen Kommunikation in drahtloser Verbindung mit dem intelligenten Projektionssystem steht, so dass die Datensignalinformationen von der externen elektronischen Vorrichtung an die Zentraleinheit übertragen werden; das Projektionsmodul elektrisch mit der Zentraleinheit verbunden ist, um Projektionsinformationen, welche von der Zentraleinheit angewiesen werden, auf einen Projektionsraum zu projizieren; die Videokamera elektrisch mit der Zentraleinheit verbunden ist und Bilder im Projektionsraum oder Beleuchtungsraum erfasst und zum Vergleich an die Zentraleinheit überträgt; und das sichtbares Licht-/Infrarotlicht-Modul elektrisch mit der Zentraleinheit verbunden ist, um sichtbare Licht-/Infrarotlichtstrahlen zu emittieren, welche den Projektionsraum oder den Beleuchtungsraum abdecken können,
**dadurch gekennzeichnet, dass** die Videokamera eine Infrarot-Transmissionsauswahlkomponente umfasst; die Infrarot-Transmissionsauswahlkomponente ein Durchgangsloch für sichtbares Licht, einen Infrarot-Transmissionsfilter und eine Gleitvorrichtung umfasst; Bereiche des Durchgangslochs für sichtbares Licht und des Infrarot-Transmissionsfilters größer als oder gleich einem Bereich von austretendem Licht von Fotografierstrahlen der Videokamera sind;
die Gleitvorrichtung unterhalb des Infrarot-Transmissionsfilters angeordnet ist und elektrisch mit der Zentraleinheit verbunden ist; die Zentraleinheit die Gleitvorrichtung derart steuert, dass sie automatisch gleitet; wenn das sichtbares Licht-/Infrarot-Lichtmodul mit InfrarotLicht arbeitet, die Zentraleinheit die Gleitvorrichtung derart steuert, dass der Infrarot-Übertragungsfilter ein Lichtaustrittsloch der Videokamera abdecken kann.

## Revendications

1. Ampoule à projection intelligente, comprenant :
un support d'ampoule (300), configuré pour connecter l'ampoule à projection intelligente et une base d'ampoule ;
un dispositif d'entrée de puissance (200) connecté électriquement au support d'ampoule ; et
un système de projection intelligente (100) connecté électriquement au dispositif d'entrée de puissance, le système de projection intelligente comprenant : une unité centrale de traitement (101), un module de projection (102), un module de transmission sans fil (105), un module de lumière visible/lumière infrarouge (104), et une caméra vidéo (103) ;
dans laquelle le module de transmission sans fil est en connexion sans fil avec un équipement électronique externe, et le module de transmission sans fil et l'équipement électronique externe sont mutuellement indépendants ; le module de transmission sans fil est connecté électriquement à l'unité centrale de traitement ; le module de transmission sans fil est configuré pour réaliser une transmission d'informations de signal de données entre le système de projection intelligente et l'équipement électronique externe en connexion sans fil avec le système de projection intelligente via un réseau sans fil à la manière d'une communication sans fil, de sorte que les informations de signal de données provenant de l'équipement électronique externe soient transmises à l'unité centrale de traitement ;
le module de projection est connecté électriquement à l'unité centrale de traitement afin de projeter des informations de projection données en instruction à partir de l'unité centrale de traitement sur un espace de projection ; la caméra vidéo est connectée électriquement à l'unité centrale de traitement et acquiert et transmet des images dans l'espace de projection ou l'espace d'éclairage à l'unité centrale de traitement pour comparaison ; et le module de lumière visible/lumière infrarouge est connecté électriquement à l'unité centrale de traitement pour émettre des faisceaux lumineux visibles/lumineux infrarouges capables de couvrir l'espace de projection ou l'espace d'éclairage ;
**caractérisée en ce que** la caméra vidéo comprend un composant de sélection de transmission infrarouge ; le composant de sélection de transmission infrarouge comprend un trou traversant de lumière visible, un filtre de transmission infrarouge, et un dispositif coulissant ; des zones du trou traversant de lumière visible et du filtre de transmission infrarouge sont plus grandes ou égales à une zone de lumière émergente de faisceaux de photographie de la caméra vidéo ;
le dispositif coulissant est disposé en dessous du filtre de transmission infrarouge et connecté électriquement à l'unité centrale de traitement ; l'unité centrale de traitement commande le coulissement automatique du dispositif coulissant ; lorsque le module de lumière visible/lumière infrarouge fonctionne sous la lumière infrarouge, l'unité centrale de traitement commande le dispositif coulissant pour permettre au filtre de transmission infrarouge de couvrir un trou d'émergence de lumière de la caméra vidéo.

2. Ampoule à projection intelligente de la revendication 1, dans laquelle le support d'ampoule comprend un convertisseur CA-CC intégré qui est connecté à un dispositif d'entrée de puissance CC et qui convertit une puissance CA en une puissance CC pour alimenter l'ampoule à projection intelligente ; l'unité centrale de traitement comprend une interface USB, qui est configurée pour être connectée à un bloc d'alimentation externe pour alimenter l'ampoule à projection intelligente, et est également adaptée pour lire des données d'une carte mémoire externe.

3. Ampoule à projection intelligente de la revendication 1, dans laquelle le module de projection comprend une lentille de projection capable d'émettre des faisceaux de projection et des faisceaux d'éclairage.

4. Ampoule à projection intelligente de la revendication 1, dans laquelle le module de projection est un pico-projecteur LCOS ou un pico-projecteur DLP.

5. Ampoule à projection intelligente de la revendication 1, dans laquelle l'unité centrale de traitement, le module de projection, le module de transmission sans fil, le module de lumière visible/lumière infrarouge, et la caméra vidéo sont intégrés sur une carte de circuit imprimé.

6. Ampoule à projection intelligente de la revendication 1, dans laquelle le système de projection intelligente comprend un haut-parleur et un module de transmission sans fil bluetooth.

7. Ampoule à projection intelligente de la revendication 1, dans laquelle le système de projection intelligente est un projecteur intelligent android, un projecteur intelligent du système Linux, ou un projecteur intelligent du système IOS.

8. Ampoule à projection intelligente de la revendication 1, dans laquelle le module de transmission sans fil est un module de communication sans fil Wan et/ou un module de transmission sans fil WiFi prenant en charge un protocole de connexion directe WiFi.

9. Ampoule à projection intelligente de la revendication 8, dans laquelle l'unité centrale de traitement comprend une unité de détection, qui est configurée pour commuter l'ampoule à projection intelligente pour fonctionner entre un mode de projection sans fil et un mode de projection externe.

10. Procédé de projection intelligente utilisant une ampoule à projection intelligente, le procédé comprenant les étapes consistant à :
utiliser (S201) un module de projection pour projeter des informations de projection initiales données en instruction à partir d'une unité centrale de traitement sur un espace de projection ;
permettre (S202) à l'unité centrale de traitement de commander un module de lumière visible/lumière infrarouge pour émettre des faisceaux lumineux infrarouges, commander un dispositif coulissant d'un composant de sélection de transmission infrarouge pour permettre à un filtre de transmission infrarouge de couvrir un trou d'émergence de lumière d'une caméra vidéo ;
utiliser (S203) la caméra vidéo pour acquérir et transmettre des images sur un plan de projection à l'unité centrale de traitement ;
permettre (S204) à l'unité centrale de traitement de traiter des images acquises pour acquérir des informations du plan de projection, les informations du plan de projection comprenant une couleur d'arrière-plan de projection et des positions concaves-convexes du plan de projection ; et
commander (S205) le module de projection pour corriger des faisceaux de projection par l'unité centrale de traitement en fonction des informations du plan de projection pour effectuer une projection intelligente.

11. Système de projection intelligente, comprenant :
une unité centrale de traitement, un module de projection, un module de transmission sans fil, un module de lumière visible/lumière infrarouge, et une caméra vidéo ;
dans lequel le module de transmission sans fil est en connexion sans fil avec un équipement électronique externe, et le module de transmission sans fil et l'équipement électronique externe sont mutuellement indépendants ; le module de transmission sans fil est connecté électriquement à l'unité centrale de traitement ; le module de transmission sans fil est configuré pour réaliser une transmission d'informations de signal de données entre le système de projection intelligente et l'équipement électronique externe en connexion sans fil avec le système de projection intelligente via un réseau sans fil à la manière d'une communication sans fil, de sorte que les informations de signal de données provenant de l'équipement électronique externe soient transmises à l'unité centrale de traitement ; le module de projection est connecté électriquement à l'unité centrale de traitement afin de projeter des informations de projection données en instruction à partir de l'unité centrale de traitement sur un espace de projection ; la caméra vidéo est connectée électriquement à l'unité centrale de traitement et acquiert et transmet des images dans l'espace de projection ou l'espace d'éclairage à l'unité centrale de traitement pour comparaison ; et le module de lumière visible/lumière infrarouge est connecté électriquement à l'unité centrale de traitement pour émettre des faisceaux lumineux visibles/lumineux infrarouges capables de couvrir l'espace de projection ou l'espace d'éclairage,
**caractérisé en ce que** la caméra vidéo comprend un composant de sélection de transmission infrarouge ; le composant de sélection de transmission infrarouge comprend un trou traversant de lumière visible, un filtre de transmission infrarouge, et un dispositif coulissant ; des zones du trou traversant de lumière visible et du filtre de transmission infrarouge sont plus grandes ou égales à une zone de lumière émergente de faisceaux de photographie de la caméra vidéo ;
le dispositif coulissant est disposé en dessous du filtre de transmission infrarouge et connecté électriquement à l'unité centrale de traitement ; l'unité centrale de traitement commande le coulissement automatique du dispositif coulissant ; lorsque le module de lumière visible/lumière infrarouge fonctionne sous la lumière infrarouge, l'unité centrale de traitement commande le dispositif coulissant pour permettre au filtre de transmission infrarouge de couvrir un trou d'émergence de lumière de la caméra vidéo.
